# EUROPÄISCHE PATENTANMELDUNG

(11) **EP 1 253 746 A2**
(43) Veröffentlichungstag der Anmeldung: **30.10.2002**
(21) Anmeldenummer: 02100328.0
(22) Anmeldetag: 02.04.2002
(51) Int. Cl.: H04L 12/18, H04L 12/42

(54) **Multicast-Übertragungsverfahren und Multicast-Übertragungssystem**

(30) Priorität: 24.04.2001 DE 10120071
(71) Anmelder: SIEMENS AKTIENGESELLSCHAFT, 80333 München (DE)
(72) Erfinder: Hummel, Heinrich, 85232, Günding (DE)

(57) **Zusammenfassung**

Die vorliegende Erfindung betrifft ein Multicast-Übertragungsverfahren und ein Multicast-Übertragungssystem, welche mit Knoten (K1, K2, K3, K4) des Netzes einen oder mehrere doppelt gerichteten Ringe (R) bilden, an denen der Sender (S) und zumindest ein Teil der Empfänger (E1, E2, E3) angekoppelt sind.

## Beschreibung

Multicast-Übertragungsverfahren und Multicast-Übertragungssystem

Die vorliegende Erfindung betrifft ein Übertragungsverfahren und ein Übertragungssystem für die Übertragung von Daten von einem Sender zu einer Gruppe von Empfängern in einem Netzwerk (Punkt-zu-Mehrpunkt).

Traditionell erfolgt bei Netzwerkanwendungen der Datenaustausch zwischen zwei Teilnehmern. Die zu übertragenden Daten werden auf einzelne Pakete bzw. Zellen aufgeteilt, mit einer Adresse versehen und an den Teilnehmer (Empfänger) in das Netz gesendet.

Neue Anwendungen wie zum Beispiel Verteilerdienste, Übertragung von Videobildern für Konferenzen oder Fernunterricht erfordern eine simultane Kommunikation zwischen Gruppen von Teilnehmern bzw. eine Übertragung von Daten von einem Teilnehmer (Sender) an eine Gruppe von Empfängern gleichzeitig.

Für solche Anwendungen werden verschiedene Übertragungsverfahren genutzt. Wenn nur eine kleine Gruppe von Empfängern existiert, kann das Unicast-Verfahren verwendet werden. Bei diesem Verfahren wird eine Kopie von jedem Paket an jeden Empfänger der Gruppe gesendet, d.h. jeder Empfänger wird separat adressiert. Existiert eine große Gruppe von Teilnehmern, werden die Daten in der Regel nach dem Multicast-Verfahren übermittelt. Bei dem Multicast-Verfahren werden die Pakete statt an einzelne Teilnehmer an eine festgelegte Gruppe von Teilnehmern adressiert. Die Weiterleitung der Multicast-Pakete zu den einzelnen Teilnehmern der Gruppe wird von dem Netz selbst übernommen. Für die Weiterleitung dieser nicht eindeutig adressierten Pakete existieren verschiedene Konzepte.

Alle soweit existierenden Konzepte für die Punkt-zu-Mehrpunkt Datenübertragung benutzen baumartige Verbindungswege. Dies gilt für sämtliche derartige Konzepte, welche im Internet Engineering Task Force (IETF) für das Internet und im ATM-Forum Technical Committee für ATM- (Asynchronous Transfer Mode) Netze standardisiert wurden.

So umfaßt ein "Verbindungsbaum" genau einen Wurzelknoten (Senderknoten) sowie etliche Transitknoten und mehrere Blattknoten (Empfängerknoten). Alle Knoten sind hierbei Switche bzw. Router. Das Sendendgerät sendet seine Daten zunächst an ein Senderknoten. Von diesem Senderknoten gelangen die Daten über Transitknoten und die einzelnen Empfängerknoten auf baumartigem Wege an die Empfängergeräte.

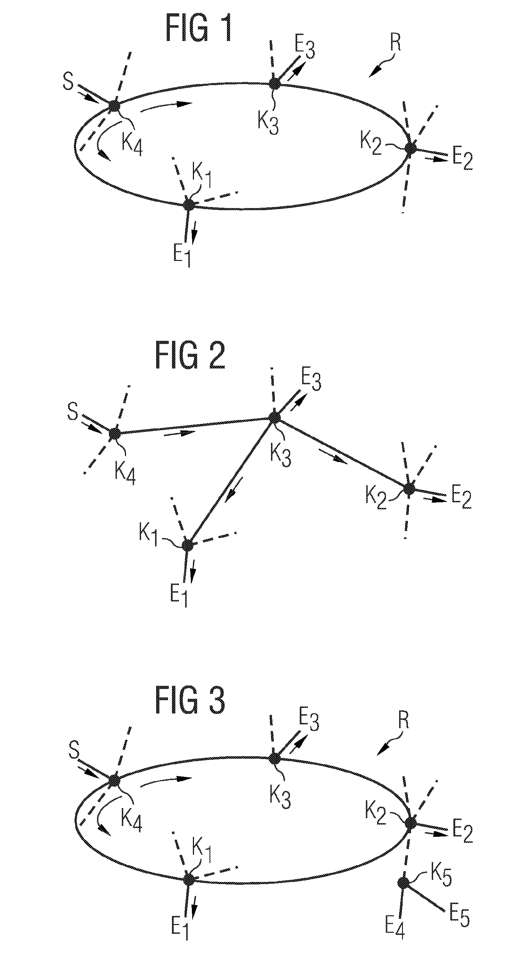

Fig. 2 zeigt ein Beispiel für ein Multicast-Übertragungsverfahren bzw. Multicast-Übertragungssystem gemäß dem Stand der Technik. Der Sender S ist über den Netzknoten K4 (Senderknoten bzw. Wurzelknoten) und die Empfänger E1, E2 und E3 sind über die Netzknoten K1, K2 und K3 (Empfängerknoten) an das Netz angekoppelt. Der Sender S sendet zu dem Knoten K4 Datenpakete, die an die Empfängergruppe E1, E2, E3 adressiert sind. Im Knoten K4 werden die Datenpakete identifiziert und an den Knoten K3 gesendet. Der Knoten K3 sendet von jedem empfangenen Datenpaket eine Kopie an den Empfänger E3 und die Knoten K1 und K2, welche die empfangenen Datenpakete an die Empfänger E1 bzw. E2 weiter leiten.

Diese Baumstruktur ist empfindlich gegenüber Störungen. Wird zum Beispiel die Verbindung zwischen den Knoten K4 und K3 gestört oder fällt der Knoten K3 aus, sind alle Empfänger E1, E2, E3 von dem Sender S getrennt, bis eine neue Verbindung zwischen dem Sender S und den Empfängern E1, E2, E3 aufgebaut wurde. Je höher der Ort der Störung in der Hierarchie der Baumstruktur ist, je mehr Empfänger sind in der Regel von der Störung betroffen. So können bei einem Ausfall eines einzelnen beteiligten Transitknotnes oder einer einzelnen Zubringer/Abnehmerleitung bezüglich eines Transitknotens einer Internet-TV Übertragungen u.U. Millionen von Empfängen betroffen sein.

Bei einer Datenübertragung mittels Lichtwellenleiter kann in dem Knoten K3 ein Splitter, der den Datenstrom in die Richtungen des Knotens K1 und des Knotens K2 aufsplittet, eingesetzt werden. An dieser Splitt-Stelle wird das Signal gedämpft und verzerrt. In einem Übertragungssystem mit einer Baumstruktur werden u.U. viele Splitter benötigt, so daß Verstärker bzw. Regeneratoren zur Regenerierung des Signals eingesetzt werden müssen.

Die der Erfindung zu Grunde liegende Aufgabe besteht darin, ein Multicast-Übertragungsverfahren bzw. Multicast-Übertragungssystem zu schaffen, das eine höhere Störsicherheit aufweist, insbesondere mit einer Baumstruktur, bei dem die Auswirkungen einer Störung weitestgehend nicht von dem Ort der Störung in der Hierarchie des Baumes abhängig sind.

Diese Aufgabe wird gemäß den Merkmalen des Patentanspruchs 1 bzw. 6 gelöst. Somit bilden Knoten des Netzes einen doppelt gerichteten Ring, an dem der Sender und zumindest ein Teil der Empfänger angekoppelt sind. Die Datenpakete können in dem so gebildeten Ring in entgegengesetzter Richtung rotieren. Wird der Ring an einer Stelle unterbrochen, weil zum Beispiel ein Knoten ausfällt oder eine Verbindung zwischen zwei Knoten gestört ist, können die gesendeten Datenpakete von den Empfängern z.B. bei Echtzeitanwendungen noch aus einer der beiden Richtungen empfangen werden. Bei einer Datenübertragung mittels Lichtwellenleiter werden für die Datenübertragung innerhalb des Ringes keine Splitter benötigt. Erhöht sich die Anzahl der Empfänger oder ist es auf Grund der Netzsituation nötig eine Baumstruktur zu bilden, werden weitere doppelt gerichtete Ringe mit Knoten des Netzes gebildet, an denen ein anderer Teil der Empfänger angekoppelt ist und die mit dem ersten Ring verbunden sind. Um die Störsicherheit dieser Struktur weiter zu erhöhen, haben zumindest einige der doppelt gerichteten Ringe zwei Verbindungen zu anderen Ringen, wobei über die erste Verbindung die Daten für die Datenübertragung in der ersten Richtung des Rings und über die zweite Verbindung die Daten für die Datenübertragung in der zweiten Richtung des Rings empfangen werden können. Bei der Bildung einer Baumstruktur werden die erste und zweite Verbindung eines gerichteten Ringes zu einem hierarchisch höheren Ring hergestellt. Um die beanspruchte Bandbreite zu reduzieren, werden die Daten nur in einer Richtung und erst bei einer Störung in beiden Richtung übertragen.

Die Erfindung wird durch die Merkmale der abhängigen Ansprüche weitergebildet.

Die vorliegende Erfindung wird nachfolgend an Hand von Beispielen unter Bezug auf die beigefügten Zeichnungen näher erläutert, in denen zeigen
Fig. 1 ein Beispiel für das erfindungsgemäße Multicast-Übertragungsverfahren,
Fig. 2 schematisch die herkömmliche Vorgehensweise bei der Multicast-Kommunikation,
Fig. 3 ein weiteres Beispiel für das erfindungsgemäße Multicast-Übertragungsverfahren,
Fig. 4 ein Beispiel für das erfindungsgemäße Multicast-Übertragungssystem mit einer Baumstruktur,
Fig. 5 ein weiteres Beispiel für das erfindungsgemäße Multicast-Übertragungssystem mit einer Baumstruktur,
Fig. 6a und 6b beispielhaft die Vorgehensweise bei der Schaffung komplexer Ringstrukturen für das Multicast-Übertragungssystem gemäß der Erfindung und
Fig. 7 und 8 weitere Beispiele für das erfindungsgemäße Multicast-Übertragungssystem mit komplexen Ringstrukturen.

Fig. 1 zeigt den gleichen Netzausschnitt wie Fig. 2. Der Sender S ist über den Netzknoten K4 und die Empfänger E1, E2 und E3 sind über die Netzknoten K1, K2 und K3 an das Netz angekoppelt. Der Sender S sendet zu dem Knoten K4 Datenpakete, die an die Empfängergruppe E1, E2, E3 adressiert sind. Gemäß der Erfindung werden die Datenpakete im Knoten K4 identifiziert und eine Kopie von jedem Datenpaket an den Knoten K3 und den Knoten K1 gesendet. Von dem Knoten K1 werden die Datenpakete zu dem Knoten K2 und von diesem zu dem Knoten K3 gesendet. In gleicher Weise sendet der Knoten K3 die Datenpakete, welche er von dem Knoten K4 empfangen hat, zu dem Knoten K2 und dieser sendet die Datenpakete weiter zu dem Knoten K1, so daß ein doppelt gerichteter Ring R entsteht. Die Knoten K1, K2 und K3 senden eines von den zwei aus den unterschiedlichen Richtungen empfangenen Datenpaketen an die Empfänger E1, E2 bzw. E3. Hierbei kann vereinbart werden, daß jeder Knoten K1, K2, K3 die Datenpakete an seine Empfänger E1, E2 bzw. E3 sendet, welche zuerst aus einer beiden Richtungen bei dem Knoten K1, K2, K3 eintreffen oder welche der Knoten K1, K2, K3 aus der Richtung empfängt, die dem kürzesten Weg zum Sendeknoten K1 entspricht. Weiterhin überwacht zum Beispiel der Sendeknoten K4 den Datenstrom innerhalb der Ringes R, damit jedes Datenpaket den Ring R je Richtung nur einmal durchläuft.

Ist der Ring R auf Grund einer Störung zwischen den Knoten K2 und K3 unterbrochen, sendet der Knoten K1 die von dem Knoten K4 empfangen Datenpakete an den Empfänger E1, der Knoten K2 die über den Knoten K1 und K4 gesendeten Datenpakete an den Empfänger E2 und der Knoten K3 die von den Knoten K4 empfangenen Datenpakete zu dem Empfänger E3.

Wurde vereinbart, daß ein Empfängerknoten K1, K2, K3 die Datenpakete aus einer festgelegten ersten Richtung an seine Empfänger E1, E2, E3 sendet, erkennt ein Empfängerknoten K1, K2, K3 das Versiegen des Datenstroms zum Beispiel am weiteren Empfangen des Datenstromes aus der zweiten Richtung und leitet den empfangen Datenstrom aus der zweiten Richtung zu die an ihn angeschlossenen Empfänger-Geräten weiter. Das Wechseln in die zweite Richtung kann bereits nach einer minimalen Wartezeit erfolgen. Ist ein Wechseln in die zweite Richtung erfolgt, und kommen danach wieder Daten aus der ersten Richtung, ist ein erneutes Wechseln in die erste Richtung nicht nötig.

Eine Erweiterung des Ringes R bei einer Zunahme der Anzahl der Empfänger E1, E2, E3 bzw. ein Schrumpfen des Ringes bei einer Verringerung der Anzahl der Empfänger E1, E2, E3 kann dynamisch während des Sendebetriebes erfolgen.

Eine Vorschrift für die Bildung eines Ringes R lautet: Bilde einen Ring R welcher neben dem Senderknoten K4 und beliebigen Transitknoten K eine von Anfang an vorgegebene Menge von Empfängerknoten K1, K2, K3 umfaßt. Diese Empfängerknoten K1, K2, K3 mögen z.B. dadurch festgelegt sein, daß sie Empfänger-Endgeräte E1, E2, E3 repräsentieren, die sich frühzeitig für die Datenübertragung angemeldet haben. Später, wenn der Ring R um einen weiteren Empfängerknoten K erweitert werden muß, weil ein entsprechendes Endgerät E sich hinzuschalten lassen möchte, ist dies erfindungsgemäß so zu tätigen, daß weder ein Datenpaket verloren geht, noch ein Datenpaket in der gleichen Richtung doppelt übertragen wird.

Die Empfängerknoten K1, K2, K3 könnten auch per Administration vorgegebene "Proxy"-Empfängerknoten sein (pro Land ein solcher Proxy-Empfängerknoten). An je einen Proxy-Empfängerknoten könnte sich z.B. landesbezogen ein Multicastverbindungsbaum nach herkömmlicher Technik anschließen.

In einem simplen Ring R erhält jeder Knoten K1, K2, K3, K4 die Übertragungsdaten von beiden Nachbarknoten, und leitet sie auch innerhalb des Ringes R ringförmig weiter, es sei denn es handelt sich um den Senderknoten K4. Darüber hinaus leitet ein im Ring R befindlicher Empfängerknoten K1, K2, K3 die Daten auch weiter hin zu seine Empfänger-Geräte E1, E2, E3 jedoch nur in einfacher Ausfertigung, d.h. entweder jene welche er von seinem linken Ringnachbarknoten erhalten hat, oder aber von seinem rechten Ringnachbarknoten. Gleiches gilt für einen Proxy-Empfängerknoten. Er speist damit den in herkömmlicher Technik an ihn angebundenen Multicast-Verbindungsbaum.

Wenn in einen simplen Ring ein weiterer Empfängerknoten K_{X} aufgenommen werden soll, bzw. wenn der Ring R um eben diesen Knoten K_{X} erweitert werden soll, werden zuerst die beiden Ringknoten K_{A} und K_{B} identifiziert, die dem Knoten K_{X} benachbart bzw. nächstgelegen sind. Die Verbindungsroute K_{A}-K_{B} muß aufgetrennt werden und durch die Verbindungsrouten K_{A}-K_{X} und K_{X}-K_{B} ersetzt werden.

Mittels Signalisierungsmeldungen können die beiden Verbindungsrouten K_{A}-K_{X} und K_{X}-K_{B} bereits aufgebaut und einsatzbereit sein und der Knoten K_{A} als auch der Knoten K_{B} können darüber verständigt worden sein und sich dies wechselseitig bestätigt haben. Im Anschluß an das letzte Datenpaket, das der Knoten K_{A} zu dem Knoten K_{B} sendet, sendet der Knoten K_{A} noch ein OAM-Paket hinterher. ("Operation-Administration-Maintainance"-Pakete sind in einen Verbindungsdatenstrom eingeschleuste Pakete, die diesem wieder, zum Beispiel zur Überwachung und Statistiken, entnommen werden.) Danach sendet der Knoten K_{A} die empfangenen Datenpakete nur noch über den Knoten K_{X} zu dem Knoten K_{B}.

Die Verwendung eines OAM-Pakets ist vorteilhaft, da der Umweg K_{A}-K_{X}-K_{B} unter Umständen der schnellere Weg sein kann und Daten über den neuen Weg eher bei dem Knoten K_{B} bzw. K_{A} eintreffen könnten als die Daten über den alten Weg K_{A}-K_{B}. Der Knoten K_{B} kann beauftragt werden, die über den neuen Weg K_{A}-K_{X}-K_{B} empfangenen Datenpakete solange in eine Warteschlange zu überführen, bis er das OAM-Paket erhalten hat.

Eine Ringerweiterung durch den Knoten K_{X} kann auch durch das Aufbrechen der Verbindung K_{A}-K_{B} begonnen werden, wobei die Daten während des Aufbaus der Verbindungsroute K_{A}-K_{X}-K_{B} gemäß einer Störung übertragen werden.

Je nach Netzsituation ist es möglich, daß nicht alle Empfänger E1, E2, E3 an einen Ring R angekoppelt werden können. Wie in Fig. 3 gezeigt, sind die Empfänger E4 und E5 (z.B. verspätete Teilnehmer, welche erst in einer "Sendepause" in dem Ring R integriert werden) über den Knoten K5 nicht direkt an den Ring angekoppelt. Ebenso ist es im Rahmen der Erfindung möglich, den Sender S über eine sichere Verbindung bzw. Knoten K, die nicht direkt mit dem Ring R verbunden sind, an den Ring R anzukoppeln.

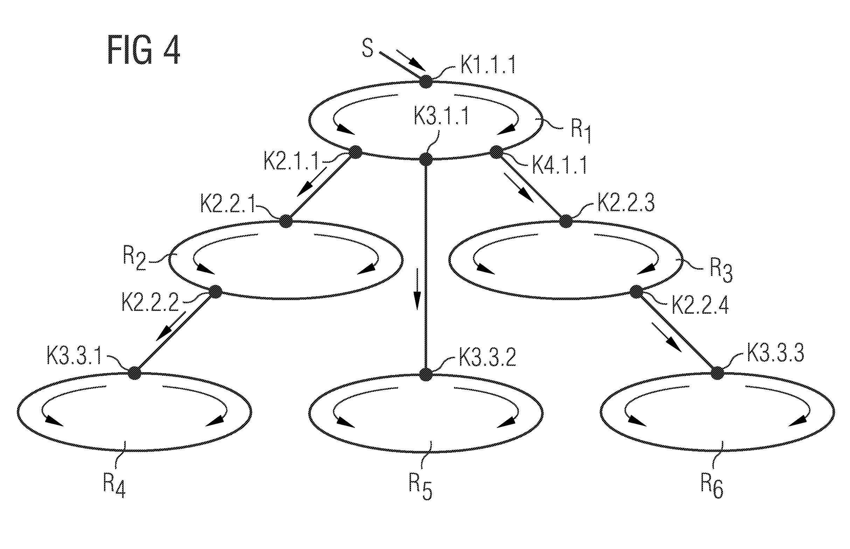

Fig. 4 zeigt ein Beispiel für das erfindungsgemäße Multicast-Übertragungssystem mit einer Baumstruktur aus sechs Ringen R1..R6 mit drei Hierarchien. Die Empfänger E1..E5 mit ihren zugehörigen Knoten K sind hier nicht in die einzelnen Ringen R1..R6 eingezeichnet worden.

Folgend wird exemplarisch die Übertragung der Datenpakete mit dem System gemäß der Erfindung an einem Zweig der Baumstruktur erläutert.

Der Sender S ist über den Knoten K1.1.1 an den ersten Ring R1 angekoppelt. Der Knoten K1.1.1 empfängt die Datenpakete von dem Sender S und sendet je eine Kopie in beide Richtungen des Ringes R1. Der Knoten K2.1.1 empfängt beide Datenpakete und sendet eines der beiden zu dem Knoten K2.2.1. Der Knoten K2.2.1 sendet von dem empfangenen Datenpaket je eine Kopie in beide Richtungen des Ringes R2. Analog empfängt der Knoten K2.2.2 beide Datenpakete und sendet eines davon zu den Knoten K3.3.1. Der Knoten K3.3.1 sendet je eine Kopie der Datenpakete in beide Richtungen des Ringes R4. Zur Erhöhung der Störsicherheit der in Fig. 4 gezeigten Baumstruktur können noch weitere Verbindung zwischen den einzelnen Ringen R1..R6 zum Beispiel zu der jeweiligen höheren Hierarchie eingeführt werden.

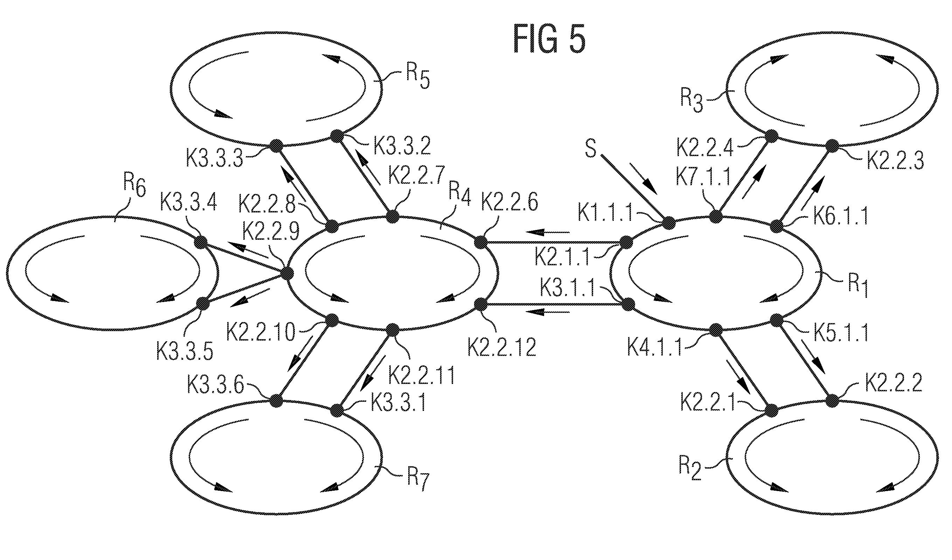

Fig. 5 zeigt eine solche vorteilhafte Baumstruktur aus sieben Ringen R1..R7 mit drei Hierarchien, die ein weiteres Beispielen gemäß dem erfinderischen Multicast-Übertragungssystem der Erfindung darstellt. Jeder der Ringe R2..R7 weist, im Gegensatz zu dem System in Fig.4, zwei Verbindungen zu einem hierarchisch höheren Ring auf. Somit besitzt jeder Knoten K2.1.1..K3.3.6 in der gesamten Struktur zwei (komplett disjunkte) Verbindungen zu dem Sendeknoten K1.1.1. Dies hat den Vorteil, daß jeder Ring R2..R7 bei einer Störung einer Verbindung zwischen den Ringen R2..R7 die Datenpakete über die zweite Verbindung aus der oberen Struktur des Baumes empfangen kann. Fällt zum Beispiel in dem in Fig. 5 gezeigten System einer der Knoten K2.1.1 oder K2.2.6 aus, erhält der Ring R4 in der zweiten Hierarchie die Datenpakete von dem Sender S im Ring R1 der obersten Hierarchie über die Knoten K3.1.1 und K2.2.12. Der Aufbau des in Fig. 5 gezeigten Systems erfolgt, zum Beispiel, indem jeder der Ringe R2..R7 über einen oder zwei Knoten K des Ringes R2..R7 je eine Verbindung zu einem hierarchisch höheren Ring R1, R2 herstellt und die empfangenen zwei Datenpakete über den bzw. die Knoten K in verschiedene Richtungen des Ringes R2..R6 sendet. Dies hat, insbesondere bei der Datenübertragung mittels Lichtwellenleiter, den Vorteil, daß die Duplikate nur einmal, zum Beispiel von dem Knoten K1.1.1 oder von dem Sender S, erzeugt werden müssen und von den anderen Knoten K lediglich ausgewählt und weitergeleitet werden. Diese Auswahl kann mittels einer Links- bzw. Rechts-Kennzeichnung der Datenpakete oder/und der Information, aus welcher Richtung bzw. von welchem Konten K (rechter oder linker Nachbar z.B. bekannt aus dem Verbindungsaufbau) die Datenpakete empfangen wurden, erfolgen.

In dem in Fig. 5 gezeigten Beispiel werden die zwei Datenpakete simultan mittels der komplett disjunkten Verbindungen übertragen. Es ist jedoch auch möglich, zum Beispiel um Bandbreite einzusparen, daß jeweils nur ein Datenpaket mittels einem Pfad bzw. einer Richtung der komplett disjunkten Verbindungen übertragen und der zweite Pfad für eine Übertragung lediglich reserviert wird. Bei einer Störung im ersten Pfad können dann die Daten über den zweiten Pfad geleitet oder mittels diesem um die Störungsstelle herumgeleitet werden. Hierfür wird einer der Knoten K, die vor der Störungsstelle liegen und eine Verbindung zu dem zweiten Pfad haben, angewiesen, die Datenpakete auf den zweiten Pfad umzuleiten. Ein Rückführung der Datenpakete auf den ersten Pfad nach der Störstelle ist nicht notwendig. Sie kann jedoch erfolgen, wenn Abschnitte des zweite Pfads durch andere Teilnehmer im Netz belastet sind. Weiterhin ist es möglich, daß der Knoten K, der die Datenpakete in die eine Richtung des Ringes R sendet und dafür sorgt, daß jedes Datenpaket den Ring R nur einmal durchläuft, das Ausbleiben der gesendeten Datenpakete erkennt und den Sendebetrieb nun in beiden Richtungen des Ringes aufnimmt.

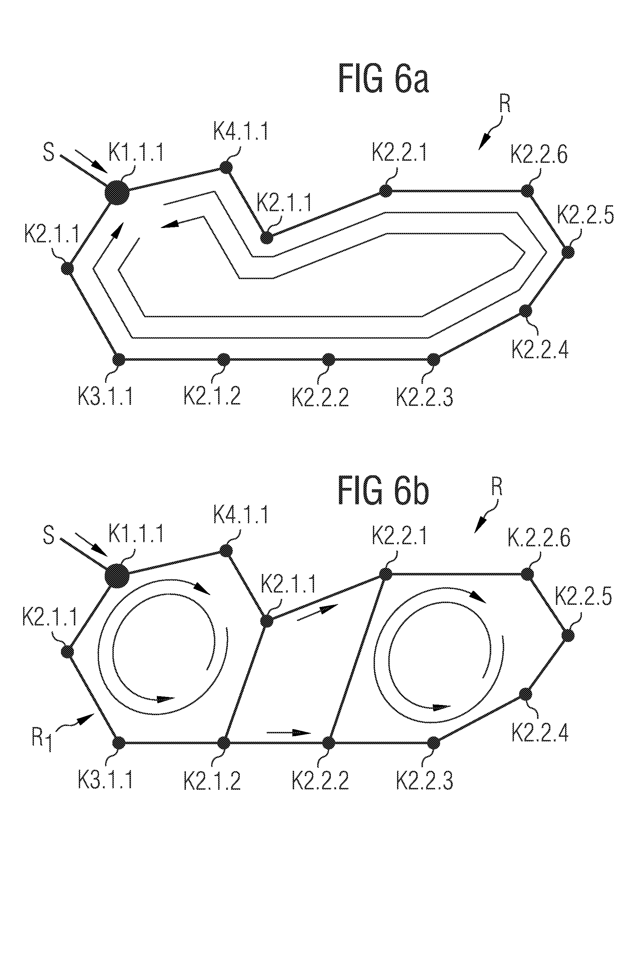

Die Fig. 6a und 6b zeigen beispielhaft die Vorgehensweise bei der Schaffung komplexer Ringstrukturen für das Multicast-Übertragungssystem gemäß der Erfindung. Für die Schaffung der in Fig. 6a gezeigten komplexen Ringstruktur, wird der Ring R in Fig. 6a derart umgebaut (aufgebrochen), daß aus ihm zwei Ringe R1 und R2 hervorgehen, welche über zwei Zwischenverbindungen K2.1.1-K2.2.1, K2.1.2-K2.2.2 miteinander verbunden sind. Die Zwischenverbindungen K2.1.1-K2.2.1, K2.1.2-K2.2.2 können sich hierbei über mehrere Transitknoten hinweg erstrecken, wobei die beiden Zwischenverbindungen K2.1.1-K2.2.1 und K2.1.2-K2.2.2 für ein hohe Störsicherheit keine gemeinsame Knoten oder physikalische Leitungen haben sollten.
Der Ring R1 ist der hierarchisch höhere und der Ring R2 der hierarchisch niedrigere. Über jede der beiden Zwischenverbindungen K2.1.1-K2.2.1, K2.1.2-K2.2.2 laufen die Datenpakete nur in Richtung zum hierarchisch niedrigeren Ring R2 hin. Vor dem Aufbrechen des Ringes R wird festgelegt in welcher Richtung die Daten von den Knoten K2.2.1 bzw. K2.2.2 im hierarchisch niedrigerem Ring R2 gesendet werden sollen, so daß Daten von den Knoten K2.2.1 und K2.2.2 stets in die oppositionelle Richtung weitergeleitet werden. Die Knoten K2.2.1-K2.2.6 des hierarchisch niedrigeren Ringes R2 haben zum Beispiel untereinander benachbarte Adressen und besitzen hinsichtlich der führenden Adreßziffer mehr Gemeinsamkeit mit den Knoten K2.1.1 und K2.1.2 als mit den Knoten K2.1.1, K3.1.1 und K4.1.1.

Durch wiederholtes Aufbrechen von Ringen auf diese Weise, entstehen Bäume von Ringen, wobei ein hierarchisch höherer Ring über zwei Zwischenverbindungen mit einem hierarchisch niedrigerem Ring verbunden ist.

Beim Aufbau bzw. Erweitern eines Ringes ist es vorteilhaft, daß bestimmte Knoten des Ringes derart "eng" zueinander benachbart werden, daß ein späteres Aufbrechens dieses Ringes eine enge Nachbarschaft auch weiterhin gewährleistet, sei dies nun im resultierenden hierarchisch höheren Ring oder im hierarchisch niedrigerem Ring.

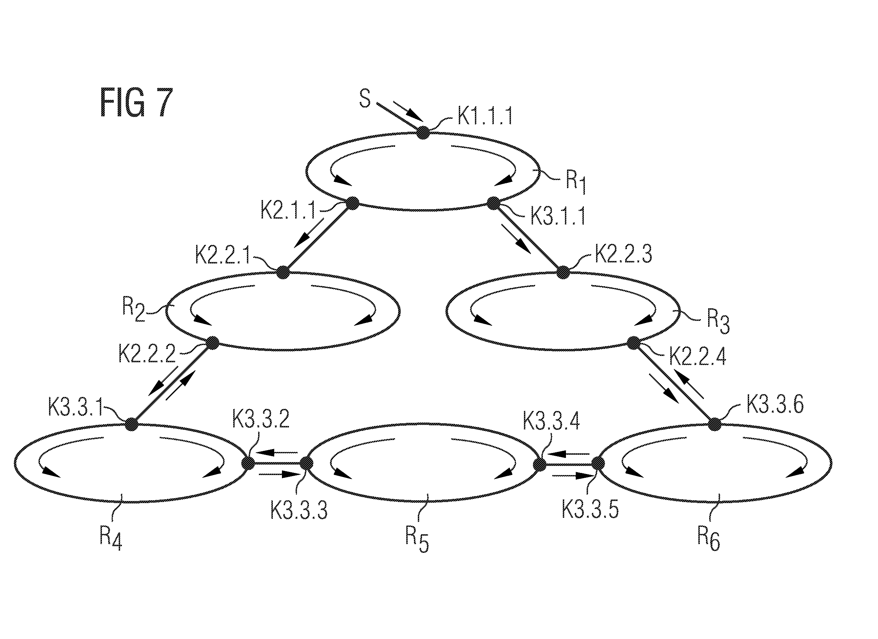

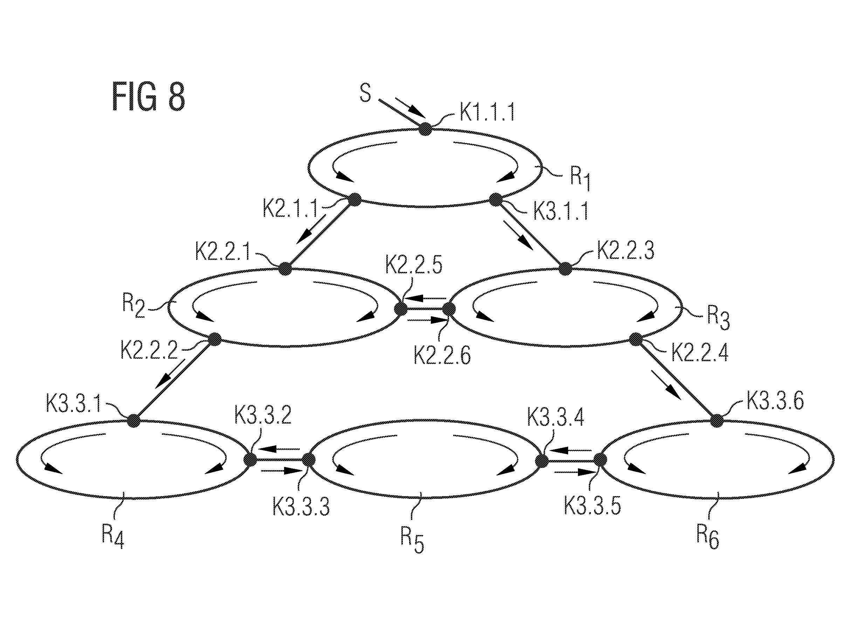

Fig. 7 und 8 zeigen ebenfalls komplexe Ringstrukturen gemäß weiteren Beispielen für das erfindungsgemäße Multicast-Übertragungssystem der Erfindung. Jeder der Ringe R2..R6 weist für die Datenübertragung eine Verbindung zu einem hierarchisch höheren Ring und eine Verbindung zu einem nicht hierarchisch höheren Ring auf. Somit kann, gleich dem System in Fig. 5, jeder Ring R2..R6 bei einer Störung einer Verbindung zwischen den Ringen R2..R6 die Datenpakete über die zweite Verbindung empfangen. Fällt zum Beispiel in dem in Fig. 7 und 8 gezeigten System einer der Knoten K2.1.1 oder K2.2.1 aus, erhält der Ring R2 die Datenpakete von dem Sender S in dem in Fig. 7 gezeigten System über die Verbindung R1 - K3.1.1 - K2.2.3 - R3 - K2.2.4 - K3.3.6 - R6- K3.3.5 - K3.3.4 R5 - K3.3.3 - K3.2.2 - R4 - K3.3.1 - K2.2.2. und in dem in Fig. 8 gezeigten System über die Verbindung R1 - K3.1.1 - K2.2.3 - R3 - K2.2.6 - K2.2.5.

Jede mit einem Netzwerk verbundene Einrichtung wie Teilnehmer oder Knoten bzw. Router hat eine eindeutige Netzadresse (IP). In den Ausführungsbeispielen sind zum Beispiel in dem hierarchisch höchsten Ring R1 Knoten K1.1.1, K2.1.1, K3.1.1 bzw. Router integriert, die sich in der obersten Adressziffer unterscheiden. Ein hierarchisch niedriger Ring R2..R6 beinhaltet Knoten K2.2.1, K2.2.2 .. bzw. Router, deren Adressziffern in den oberen Ziffern identisch und in den niedrigeren Ziffern unterschiedlich sind.

So kann die "engste" Nachbarschaft von Knoten bei einem Aufbrechen bzw. einem Erweitern von Ringen durch eine weitestgehende Übereinstimmung der führenden Ziffern der Adressen zweier Knoten und/oder mit einer Übereinstimmung der zugehörigen Autonomous System Number (ASN) ermittelt werden, um dafür zu sorgen, daß verschiedene Autonomous Systems (AS) jeweils einen oder zwei Knoten im hierarchisch höheren Ring besitzen, sowie einen AS-internen hierarchisch niedrigeren Ring.

In den angeführten Beispielen wurde die Verbindung zweier Ringe R immer mittels zweier Knoten K hergestellt. Es ist jedoch auch möglich, daß ein Knoten mehrere Ringe verbindet bzw. mehrere Ringe durch einen Knoten gehen.

## Patentansprüche

1. Multicast-Übertragungssystem
**dadurch gekennzeichnet,**
**daß** Knoten (K1, K2, K3, K4) des Netzes einen ersten doppelt gerichteten Ring (R) bilden, an dem der Sender (S) und zumindest ein Teil der Empfänger (E1, E2, E3) angekoppelt sind.

2. Multicast-Übertragungssystem gemäß Anspruch 1,
**dadurch gekennzeichnet,**
**daß** Knoten (K1, K2, K3, K4) des Netzes weitere doppelt gerichtete Ringe (R2..R6) bilden, an denen ein anderer Teil der Empfänger (E1, E2, E3) angekoppelt ist und die mit dem ersten Ring (R1) verbunden sind.

3. Multicast-Übertragungssystem gemäß Anspruch 3,
**dadurch gekennzeichnet,**
**daß** zumindest einige der doppelt gerichteten Ringe (R2..R6) mindestens zwei Verbindungen zu einem oder mehreren Ringen (R1..R6) haben, wobei über die erste Verbindung die Daten für die Datenübertragung in der ersten Richtung des Rings (R2..R6) und über die zweite Verbindung die Daten für die Datenübertragung in der zweiten Richtung des Rings (R2..R6) empfangen werden.

4. Multicast-Übertragungssystem gemäß Anspruch 3,
**dadurch gekennzeichnet,**
**daß** einige der gerichteten Ringe (R2..R6) eine Baumstruktur bilden, wobei die erste und zweite Verbindung zu einem hierarchisch höheren Ring (R1, R2) bestehen.

5. Multicast-Übertragungssystem gemäß einem der Ansprüche 1 bis 4,
**dadurch gekennzeichnet,**
**daß** Daten nur in einer Richtung und bei einer Störung zumindest abschnittsweise in beiden Richtung übertragen werden.

6. Multicast-Übertragungsverfahren
**gekennzeichnet durch**,
Bilden eines ersten doppelt gerichteten Rings (R) mit Knoten (K1, K2, K3, K4) des Netzes an dem der Sender (S) und zumindest ein Teil der Empfänger (E1, E2, E3) angekoppelt sind.

7. Multicast-Übertragungsverfahren gemäß Anspruch 6,
**gekennzeichnet durch,**
Bilden weiterer doppelt gerichteter Ringe (R2..R6) mit Knoten (K1, K2, K3, K4) des Netzes an denen ein anderer Teil der Empfänger (E1, E2, E3) angekoppelt ist und die mit dem ersten Ring (R1) verbunden sind.

8. Multicast-Übertragungsverfahren gemäß Anspruch 7,
**dadurch gekennzeichnet,**
**daß** zumindest von einigen der doppelt gerichteten Ringe (R2..R7) mindestens zwei Verbindungen zu einem oder mehreren Ringen (R1..R7) gebildet werden, wobei über die erste Verbindung die Daten für die Datenübertragung in der ersten Richtung des Rings (R2..R7) und über die zweite Verbindung die Daten für die Datenübertragung in der zweiten Richtung des Rings (R2..R7) empfangen werden.

9. Multicast-Übertragungsverfahren gemäß Anspruch 8,
**gekennzeichnet durch,**
Bilden einer Baumstruktur mit einigen der gerichteten Ringe (R2..R7), wobei die erste und zweite Verbindung zu einem hierarchisch höheren Ring (R1, R2) bestehen.

10. Multicast-Übertragungsverfahren gemäß einem der Ansprüch 6 bis 9,
**dadurch gekennzeichnet,**
**daß** Daten nur in einer Richtung und bei einer Störung zumindest abschnittsweise in beiden Richtung übertragen werden.
